# EUROPEAN PATENT SPECIFICATION

(11) **EP 0 653 997 B1**
(45) Date of publication and mention of the grant of the patent: **10.12.1997**
(21) Application number: 94908075.8
(22) Date of filing: 10.08.1993
(51) Int. Cl.: B65D 43/04, B65D 55/02, B65D 77/04, B01L 9/06

(54) **IMPROVEMENTS IN OR RELATING TO SECURITY CONTAINERS FOR SAMPLES**
SICHERHEITSBEHÄLTER FÜR PROBEN
AMELIORATIONS RELATIVES A DES RECIPIENTS DE SECURITE POUR ECHANTILLONS

(30) Priority: 11.08.1992 GB 9216955
(43) Date of publication of application: 24.05.1995
(73) Proprietor: VERSAPAK (INTERNATIONAL) LTD., Erith, Kent DA18 4AF (GB)
(72) Inventor: ANDERSON, Ian, Denny, Harefield, Orpington Kent BR6 6EP (GB); ANDERSON, Michael, Denny Crocklands, Wrotham Kent (GB)
(74) Representative: Wright, Hugh Ronald
(86) International application number: GB9301691
(87) International publication number: WO9404425

(56) References cited:
- WO-A-92/07770
- US-A- 4 452 382
- US-A- 4 534 467
- US-A- 4 873 193

## Description

This invention relates to a container suitable for holding a sample of liquid or solid material in a secure aid tamper-proof manner.

The invention finds particular, but not exclusive, application in the provision of a sample container for biological samples such as urine samples taken in drug testing procedures for athletes.

The sample taken for such purposes is normally stored in a standard glass bottle or jar, having a normal sealed screw cap which is readily releasable. There is a requirement to secure such a sample bottle in a tamper-proof fashion so that it is not possible to interfere with the contents once the bottle has been closed and sealed. It is also desirable to provide a container for the transport of such sample bottles which will afford a measure of protection to the bottle against breakage in transit.

WO-A-92/07770 discloses a prior art container having a hollow body, a lid portion for closing an open end of the body and locking means for locking the lid portion to the closure. Once closed with the lid portion, the container is opened by removal of a tear-away strip in the skirt of the lid portion which leaves the lid portion in several parts so that the container cannot readily be reused.

US-A-4 873 193 discloses an apparatus for the collection and preservation of fluid biological evidence. The apparatus is adapted to receive a sample bottle or jar.

US-A-4 452 382 discloses a container for a liquid sample having a snap-on lid. The lid is extended to form a spout which is closed by a sealing wall having a peripheral weakened portion. The scaling wall is removable to enable the sample to be poured from the spout.

It is therefore an object of the present invention to provide a container for such bottles which can be closed with the sample bottle inside, in a tamper-proof fashion, so that it is readily apparent if there has been any interference of the contents.

The present invention provides a container for a sample bottle having the features recited in claim 1.

Accordingly, the closure is formed with a tear-out portion defined from the remainder of the closure by a line of weakness, which tear-out portion may be removed to allow the authorised removal of the contents of the container.

Furthermore, the closure is provided with locking means which cooperates with the body to allow the closure to be freely positioned on the body to close the body, but which prevents removal of the closure from the body without damage to either the closure or the body.

Preferably the sample bottle (or jar) has its own releasable closure to seal any contents therein.

In order to promote a fuller understanding of the above and other aspects of the present invention, an embodiment will now be described, by way of example only, with reference to the accompanying drawings in which:
Figure 1 shows a perspective view of a sample container embodying the invention, with a sample bottle therein, ready to be sealed in the container,
Figure 2 is a plan view of the container of Figure 1, without the sample bottle and with the closure of the container folded back,
Figure 3 is a cross-section on the line III-III of Figure 2 with a sample bottle shown in the container before use,
Figure 4 is a similar cross-section to that of Figure 3, only with the sample bottle retained in the container with the closure in a sealed position on the container,
Figure 5 is an external side view similar to that of Figure 4,
Figure 6 is a schematic cross-section (not to scale) showing in detail the locking means between the closure and the container of the previous figures, and
Figure 7 is a schematic cross-section (not to scale) on the line VII-VII of Figure 2.

The embodiment of the invention shown in the drawings is arranged for use with a sample bottle which may contain a liquid or solid sample.

A typical sample bottle is shown in the drawings at 10 having a body 11 and a removable screw or bayonet fitting fluid tight cap 12 or a necked portion 13 separated from the body 11 by a shoulder 14, all of which are of conventional design *per se*.

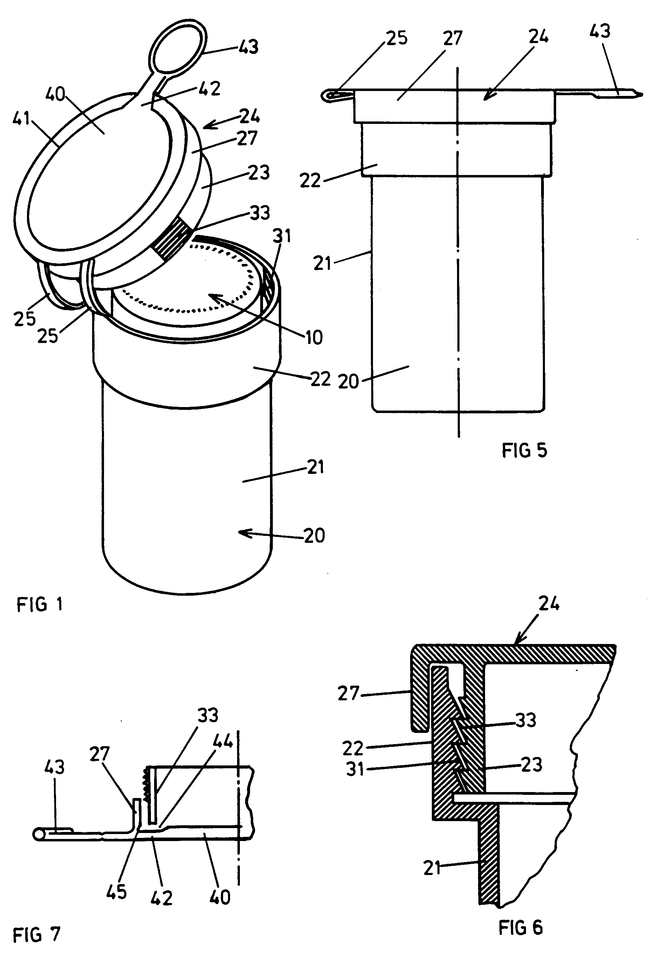

A container for the bottle 10, which embodies the invention, is shown in schematic perspective view at Figure 1. The container comprises a main hollow body portion 20 having a base 21a, a side wall 21, and an open end 20b opposite the base portion 21a, and which is shaped to receive the sample bottle 10, and which has an enlarged upper portion 22. A closure for the container, which is in the form of a cover which is indicated generally at 24, and includes a skirt portion 23 which, in the closed or sealed position, seats in the enlarged upper portion 22 of the container body.

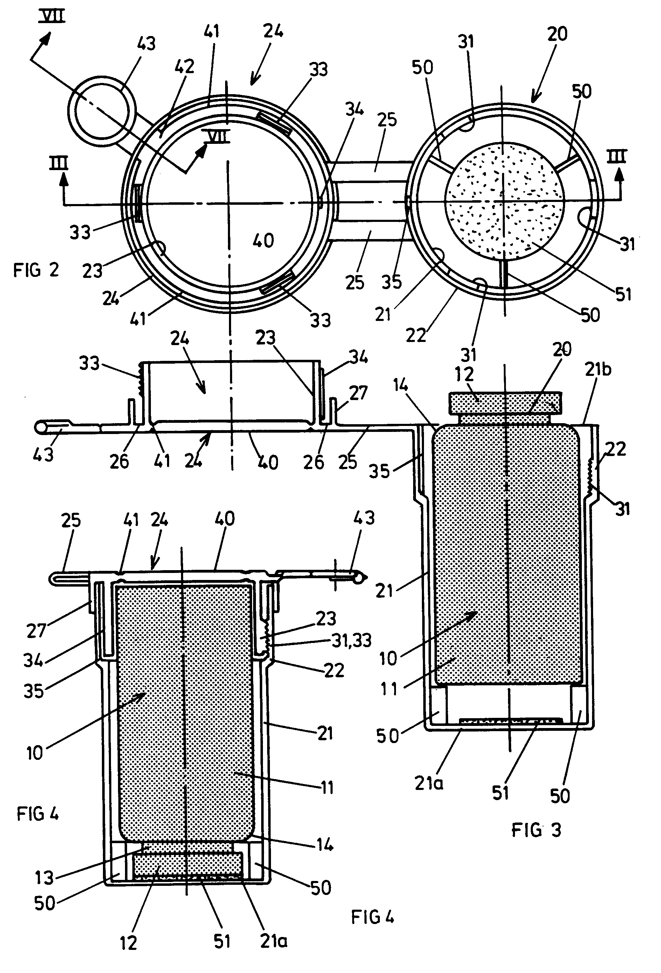

The cover 24 is flexibly attached to the body 20 of the container by means of two bridging pieces 25; and is arranged so that as the bridging pieces 25 are folded over, from the situation shown in Figures 2 and 3, through that as shown in Figure 1, to the situation shown in Figures 4 and 5, the skirt 23 may be inserted in the enlarged portion 22 of the container body to position the cover on the container. The cover 24 has a flange 26 arranged to overlie the top edge of the enlarged portion 22, and a further, outer, skirt 27 which extends down over the outer surface of the upper part of the enlarged portion 22 when the cover is in the closed position, as seen particularly in Figures 4 and 5.

In order to secure the cover in the closed position, a number of locking means 30, in this embodiment three, are provided to be operative between the body portion 20 and the cover 24, and spaced around the peripheries thereof. The locking means, of this embodiment, each comprise a first series of ratchet teeth 31 formed locally on the inner surface of the enlarged portion 22 of the body of the container; and a second series of ratchet teeth 33 formed locally on a corresponding position on the outer surface of the skirt 23 of the cover 24. The first and second ratchet teeth are arranged so that the cover 24 can be pushed into place from the position shown in Figure 1 to that shown in Figure 4 with the teeth riding over one another. However, once the cover is in position, the ratchet teeth lock it against removal so that the container is securely sealed.

Theskirt portion 23 of the cover 24, is formed with a key 34 which is arranged to cooperate with a keyway 35 formed in the inner surface of the enlarged portion 22 of the body 20, when the cover is positioned on the body. Thus the cover is angularly located relative to the body to ensure that the first and second sets of ratchet teeth are correctly aligned when the cover is placed in position.

In order to permit authorised removal of the bottle 10 from a closed and sealed container, the central portion 40 of the cover 24 is defined from the remainder of the cover structure by a line of weakness indicated at 41, which is generally circular but extends outwards to the periphery of the cover to form a tab 42. The tab 42 is extended to form a loo-like handle 43 which a user may grip to tear the central portion 40 from the remainder of the cover 24 along the line of weakness 41. As best seen in Figure 7, the skirt portion 23 is formed with a local aperture 44, and the outer skirt portion 27 is locally weakened as shown at 45, to enable the central portion to be so torn away at the periphery of the cover.

Removal of the central portion 40 in this manner, provides an aperture in the top of the closed container through which the bottle 10 may be removed. However it is to be noted that since the material of the cover is torn for such removal, this cannot be achieved without it being immediately apparent that the container has been opened. The line of weakness 41 can be formed by suitable grooves as indicated at 46 in Figure 6.

The conventional bottle used with this embodiment of the invention is necked and has a screw top 12 which is generally slightly smaller than the overall body 11 of the bottle. The bottom of the container body 20 is provided with ribs 50 which are so arranged as to support the bottom of the body 11 of the bottle 10, with the screw cap 12 proud of the top of the container, as shown in Figure 3, when the bottle is placed in the container with its screw cap upwards. In this situation, the screw cap 12 extends sufficiently far out of the container to prevent the cover 24 being pushed into position to engage the locking means 30. Thus the container cannot then be accidentally closed before its intended use.

When it is desired to seal a bottle 10 in the container, it is placed in the body 20 of the container, screw cap downwards as shown in Figure 4, the ribs 50 being arranged to accommodate the screw cap 12 between them, and in this situation the bottom of the bottle does not extend above the body of the container and the cover 24 can be pushed fully home to seal the container, as shown in Figure 4. A resilient material pad 51 is provided in the bottom of the body 20 of the container to prevent the bottle rattling in the closed container.

In a modification of the embodiment shown in the drawings, the handle 43 may include a suitable aperture by means of which it may be secured, when the cover is in its closed position, to the outer face of the skirt 22, by means of a sealing button of known type *per se* sold under the Trade Mark "Versapak". This may provide an additional seal for the container, and thus additional security.

The container and cover are preferably moulded, integrally in one piece, from synthetic plastics material of a suitable grade to provide an economic yet tough protective container for the bottle. The container may be marked with appropriate serial numbers or codes moulded into the outer surface, particularly on the central portion 40 of the cover, so that the container, and the sample sealed therein may be uniquely identified. The body of the container may also be marked similarly, with the corresponding serial number or code.

The side wall 21 of the body 20 of the container, may be provided with a window (not shown in the drawings) along all or part of its height, so that the contents, either in a bottle within the container or within the container itself, may be obeserved without opening or otherwise tampering with the container.

Thus is can be seen that the invention provides a container which can seal a sample bottle in a tamper-proof fashion, and which provides for the safe transport of the sample bottle.

While the above embodiment has been discribed with the use of a sample bottle, it is to be understood that the container may also be used without a bottle to contain a sample, in which case the flange 26 of the closure (24) may be arranged to seal in fluidtight manner on the body (20). In cases where the sample is solid, such sealing would not be needed unless the sample was of a fine powder or similar material.

## Claims

1. A container for a sample bottle (10), the container being adapted to receive the sample bottle and comprising a hollow body (20) having a base (21a), a side wall (21) and an open end (21b) opposite the base, a closure (24) for that open end (21b), said closure (24) comprising a central portion (40) forming an end face of the container when closed, and a skirt portion (23) depending from said central portion (40), and locking means (31,33) for locking the skirt of the closure (24) to the body (20); characterised in that in said central portion (40) there is provided a tear-off portion, being defined by a line of weakness, whereby removal of the tear-off portion (40) provides an aperture in said end face of said closed container and leaves said skirt portion (23) locked to said body (20), such that the sample bottle can be removed through the opening, the removal of the tear-off portion (40) thereby being apparent on subsequent observation of the container.

2. A container as claimed in claim 1, in which said tear-off portion (40) is provided with a handle (43) by which it may be gripped to so tear it from said end face.

3. A container as claimed in claim 2, in which said tear-off portion (40) is formed by said line of weakness (41) to have a tab (42) which extends to the periphery of said end face and said handle (43) is formed on said tab.

4. A container as claimed in any preceding claim, in which said hollow body has an enlarged portion (22) adjacent said open end (21b) and said closure is formed with a skirt portion (23) arranged to fit into said enlarged portion when the closure is fitted to the hollow body, thus to locate the closure on the body.

5. A container as claimed in claim 4, in which said closure is formed with a further skirt portion (27) which is arranged to engage the outer surface of said enlarged portion (22) when the closure is fitted to the hollow body.

6. A container as claimed in any preceding claim, in which said locking means comprises a first series of ratchet teeth (31) formed on said hollow body (20), and a second series of ratchet teeth (33) formed on said closure (24), said ratchet teeth being arranged to cooperate to allow free fitting of the closure on the hollow body and to prevent subsequent removal of the closure from the hollow body.

7. A container as claimed in claim 6, in which said series of ratchet teeth are formed over spaced portions of the peripheries of the closure and hollow body.

8. A container as claimed in claim 6 or claim 7, when dependent upon claim 4, in which said first series of ratchet teeth are formed on the inside surface of said enlarged portion (22) and said second series of ratchet teeth are formed on the outside surface of said skirt portion (23).

9. A container as claimed in any preceding claim, in which said closure (24) and said hollow body (20) are moulded integrally as one piece, connected by at least one bridging member (25), from synthetic plastics material.

10. A combination of a container as claimed in any preceding claim, with a sample bottle (10), the hollow body (20) being adapted to receive the bottle.

11. A combination as claimed in claim 10, in which said sample bottle (10) is formed with an upper necked portion (13) of smaller size than the body (11) thereof, and said container is provided with bottle supports (50) arranged to support the bottle by the base (21a) thereof with the necked portion proud of the top (21b) of the body of the container, thus to prevent fitting of the closure (24) to the body (20) of the container; and arranged to receive the necked portion of the bottle there between to support the bottle by a shoulder (14) between the necked portion and the body of the bottle with the base of the bottle within the body of the container, thus to allow the fitting of the closure (24) to the body (20) of the container.

## Patentansprüche

1. Behälter für eine Probenflasche (10), wobei der Behälter zur Aufnahme der Probenflasche ausgelegt ist und aufweist: einen hohen Körper (20) mit einer Basis (21a), einer Seitenwand (21) und einem der Basis entgegengesetzten offenen Ende (21b), einen Verschluß (24) für das offene Ende (21b), wobei der Verschluß (24) einen eine Endseite des verschlossenen Behälters bildenden Mittelabschnitt (40) aufweist, und einen Schürzenabschnitt (23), der von dem Mittelabschnitt (40) herabhängt, sowie ein Riegelmittel (31, 33) zum Verriegeln der Schürze des Verschlusses (24) an dem Körper (20);
dadurch gekennzeichnet, daß in dem Mittelabschnitt (40) ein durch eine Schwächungslinie festgelegter Abziehabschnitt vorgesehen ist, wobei sich durch Entfernen des Abziehabschnitts (40) eine Öffnung in der Endseite des geschlossenen Behälters ergibt und den Schürzenabschnitt (23) an dem Körper (20) derart verriegelt läßt, daß die Probenflasche durch die Öffnung entfernt werden kann, wodurch das Entfernen des Abziehabschnitts (40) bei nachfolgender Betrachtung des Behälters sichtbar ist.

2. Behälter nach Anspruch 1, in dem der Abziehabschnitt (40) mit einem Handgriff (43) versehen ist, an dem er ergriffen werden kann, um ihn von der Endseite wegzuziehen.

3. Behälter nach Anspruch 2, in dem der Abziehabschnitt (40) durch die Schwächungslinie (41) derart geformt ist, daß er eine Lasche (42) aufweist, die zum Umfang der Endseite verläuft, und wobei der Handgriff (43) an der Lasche ausgebildet ist.

4. Behälter nach einem der vorhergehenden Ansprüche, in dem der hohle Körper nahe dem offenen Ende (21b) einen erweiterten Abschnitt (22) aufweist und der Verschluß mit einem Schürzenabschnitt (23) derart geformt ist, daß er in den erweiterten Abschnitt paßt, wenn der Verschluß auf den hohlen Körper gesetzt wird, um hierdurch den Verschluß an dem Körper anzuordnen.

5. Behälter nach Anspruch 4, in dem der Verschluß mit einem weiteren Schürzenabschnitt (27) ausgebildet ist, der angeordnet ist, um an der Außenfläche des erweiterten Abschnitts (22) anzugreifen, wenn der Verschluß auf den hohen Körper gesetzt wird.

6. Behälter nach einem der vorhergehenden Ansprüche, in dem das Riegelmittel eine erste Serie von an dem hohen Körper (20) ausgebildeten Rastzähnen (31) sowie eine zweite Serie von an dem Verschluß (24) ausgebildeten Rastzähnen (33) aufweist, wobei die Rastzähne angeordnet sind, um zusammenwirkend ein freies Aufsetzen des Verschlusses auf den hohlen Körper zu gestatten und ein anschließendes Entfernen des Verschlusses von dem hohen Körper zu verhindern.

7. Behälter nach Anspruch 6, in dem die Serien der Rastzähne über mit Abstand angeordneten Abschnitten der Umfänge des Verschlusses und des hohen Körpers ausgebildet sind.

8. Behälter nach Anspruch 6 oder Anspruch 7, sofern von Anspruch 4 abhängig, in dem die erste Serie der Rastzähne an der Innenfläche des erweiterten Abschnitts (22) ausgebildet ist und die zweite Serie der Rastzähne an der Außenoberfläche des Schürzenabschnitts (23) ausgebildet ist.

9. Behälter nach einem der vorhergehenden Ansprüche, in dem der Verschluß (24) und der hohle Körper (20) als ein Stück integral aus Kunststoffmaterial gegossen sind, wobei sie durch zumindest ein Brückenelement (25) verbunden sind.

10. Kombination eines Behälters nach einem der vorhergehenden Ansprüche mit einer Probenflasche (10), wobei der hohle Körper (20) zur Aufnahme der Flasche ausgelegt ist.

11. Kombination nach Anspruch 10, in der die Probenflasche (10) mit einem oberen Halsabschnitt (13) ausgebildet ist, der kleiner ist als ihr Körper (11), und wobei der Behälter mit Flaschenstützen (50) versehen ist, die angeordnet sind, um die Flasche an seiner Basis (21a) derart zu stützen, daß der Halsabschnitt von der Oberseite (21b) des Körpers des Behälters vorsteht, um hierdurch das Aufsetzen des Verschlusses (24) auf den Körper (20) des Behälters zu verhindern; und die angeordnet sind, um den Halsabschnitt der Flasche zwischen sich aufzunehmen, um die Flasche an einer Schulter (14) zwischen dem Halsabschnitt und dem Körper der Flasche zu stützen, während sich die Basis der Flasche in dem Körper des Behälters befindet, um hierdurch das Aufsetzen des Verschlusses (24) auf den Körper (20) des Behälters zu ermöglichen.

## Revendications

1. Conteneur destiné à un flacon d'échantillonnage (10), le conteneur étant conçu pour recevoir le flacon d'échantillonnage, et comprenant un corps creux (20) comportant une embase (21a), une paroi latérale (21) et une extrémité ouverte (21b) située à l'opposé de l'embase, une fermeture (24) destinée à cette extrémité ouverte (21b), ladite fermeture (24) comprenant une partie centrale (40) formant une face d'extrémité du conteneur lorsque celui-ci est fermé, et une partie de jupe (23) descendant de ladite partie centrale (40), et des moyens de verrouillage (31, 33) destinés à verrouiller la jupe de la fermeture (24) sur le corps (20) ; caractérisé en ce que, dans ladite partie centrale (40), est prévue une partie déchirable qui est définie par une ligne de faible résistance, grâce à quoi le retrait de la partie déchirable (40) fait apparaître une ouverture dans ladite face d'extrémité dudit conteneur fermé et laisse ladite partie de jupe (23) verrouillée sur ledit corps (20), de sorte que le flacon d'échantillonnage peut être retiré par l'ouverture, le retrait de la partie déchirable (40) apparaissant ainsi lors de l'observation subséquente du conteneur.

2. Conteneur selon la revendication 1, dans lequel ladite partie déchirable (40) est pourvue d'une poignée (43) grâce à laquelle elle peut être saisie afin de l'ôter ainsi de ladite face d'extrémité par déchirage.

3. Conteneur selon la revendication 2, dans lequel ladite partie déchirable (40) est formée par ladite ligne de faible résistance (41) qui comporte une patte (42) qui s'étend jusqu'à la périphérie de ladite face d'extrémité, et ladite poignée (43) est formée sur ladite patte.

4. Conteneur selon l'une quelconque des revendications précédentes, dans lequel ledit corps creux présente une partie élargie (22) contiguë à ladite extrémité ouverte (21b) et ladite fermeture est formée d'une partie de jupe (23) agencée pour s'insérer dans ladite partie élargie lorsque la fermeture est montée sur le corps creux, permettant ainsi de positionner la fermeture sur le corps.

5. Conteneur selon la revendication 4, dans lequel ladite fermeture est formée d'une autre partie de jupe (27) qui est agencée pour coopérer avec la suface extérieure de ladite partie élargie (22) lorsque la fermeture est montée sur le corps creux.

6. Conteneur selon l'une quelconque des revendications précédentes, dans lequel lesdits moyens de verrouillage comprennent un première série de dents d'encliquetage (31) formées sur ledit corps creux (20), et une seconde série de dents d'encliquetage (33) formées sur ladite fermeture (24), lesdites dents d'encliquetage étant conçues pour coopérer afin de permettre la libre mise en place de la fermeture sur le corps creux et d'empêcher le retrait subséquent de la fermeture du corps creux.

7. Conteneur selon la revendication 6, dans lequel lesdites séries de dents d'encliquetage sont formées sur des parties espacées des périphéries de la fermeture et du corps creux.

8. Conteneur selon la revendication 6 ou 7 lorsqu'elles dépendent de la revendication 4, dans lequel les dents de ladite première série de dents d'encliquetage sont formées sur la surface intérieure de ladite partie élargie (22) et ladite seconde série de dents d'encliquetage sont formées sur la surface extérieure de ladite partie de jupe (23).

9. Conteneur selon l'une quelconque des revendications précédentes, dans lequel ladite fermeture (24) et ledit corps creux (20) sont intégralement moulés en une seule pièce, étant reliés par au moins un élément de pontage (25), à partir de matière plastique synthétique.

10. Combinaison d'un conteneur selon l'une quelconque des revendications précédentes, avec un flacon d'échantillonnage (10), le corps creux (20) étant conçu pour recevoir le flacon.

11. Combinaison selon la revendication 10, dans lequel ledit flacon d'échantillonnage (10) est formé d'une partie étranglée supérieure (13) de taille inférieure à celle de son corps (11), et ledit conteneur est pourvu de supports de flacon (50) agencés pour supporter le flacon au moyen de son embase (21a), avec la partie étranglée dépassant du sommet (21b) du corps du conteneur, afin d'empêcher ainsi le montage de la fermeture (24) sur le corps (20) du conteneur ; et agencés pour recevoir, entre eux, la partie étranglée du flacon afin de supporter le flacon au moyen d'un épaulement (14) entre la partie étranglée et le corps du flacon avec l'embase du flacon à l'intérieur du corps du conteneur, permettant ainsi le montage de la fermeture (24) sur le corps (20) du conteneur.
